# EUROPÄISCHE PATENTSCHRIFT

(11) **EP 3 865 379 B1**
(45) Veröffentlichungstag und Bekanntmachung des Hinweises auf die Patenterteilung: **13.09.2023**
(21) Anmeldenummer: 21156990.0
(22) Anmeldetag: 12.02.2021
(51) Int. Cl.: B32B 1/00, B32B 3/12, B32B 5/18, B32B 15/04, B32B 15/20, B62D 29/04, B62D 63/06, B62D 3/08, B62D 63/08

(54) **PLATTENFÖRMIGES BAUELEMENT SOWIE FAHRWERK FÜR EIN FREIZEITFAHRZEUG MIT EINEM SOLCHEN BAUELEMENT**
PLATE-SHAPED STRUCTURAL ELEMENT AND RUNNING GEAR FOR A LEISURE VEHICLE WITH SUCH A STRUCTURAL ELEMENT
COMPOSANT EN FORME DE PANNEAU, AINSI QUE TRAIN D'ATTERRISSAGE POUR UN VÉHICULE DE LOISIR DOTÉ D'UN TEL COMPOSANT

(30) Priorität: 12.02.2020 DE 102020103543
(43) Veröffentlichungstag der Anmeldung: 18.08.2021
(73) Patentinhaber: Erwin Hymer Group SE, 88339 Bad Waldsee (DE)
(72) Erfinder: Buck, Rainer, 88239 Wangen i. Allgäu (DE); Metzler, Marcus, 88339 Bad Waldsee (DE); Dorn, Günter, 88282 Schlier (DE)
(74) Vertreter: Waller, Stefan

(56) Entgegenhaltungen:
- EP-A1- 1 649 993
- EP-A1- 3 034 226
- EP-A1- 3 511 085
- DE-A1-102016 224 340
- DE-U1- 9 402 906
- US-A1- 2019 291 559

## Beschreibung

Die Erfindung betrifft ein plattenförmiges Bauelement, ein Fahrwerk für ein Freizeitfahrzeug mit einem solchen Bauelement, ein Verfahren zur Herstellung eines solchen Bauelements sowie ein Verfahren zur Herstellung eines Fahrwerks für ein Freizeitfahrzeug.

Im klassischen Sinne setzt sich ein Kraftfahrzeug aus den Komponenten Fahrgestell, Antrieb und Karosserie zusammen. Das Fahrgestell, auch Chassis, Rahmen oder Untergestell genannt, bildet ein Grundgerüst, das den Antrieb, die Karosserie und die Nutzlast trägt und gegen äußere Krafteinwirkungen stabilisiert und an dem diese montiert sind. Als Rahmen wurden verschiedene Konstruktionsformen genutzt. Die Karosserie, die auf den Rahmen aufgesetzt wird und im Allgemeinen verschraubt ist, soweit es sich um ein separates Bauteil und nicht um eine integrierte Bauform, wie bei einer selbstragenden Karosserie, handelt, bildet dabei eine Außenhaut zum Schutz der Insassen oder der transportierten Güter. Daneben kann die Karosserie auch mit dem Rahmen ein Bauteil bilden als selbsttragende Karosserie. Als Fahrwerk bezeichnet man hier die Gesamtheit aller Teile eines Landfahrzeugs, die eine Verbindung des Fahrgestells über die Räder zu Fahrbahn herstellen.

Unter einem Freizeitfahrzeug wird ein Fahrzeug oder Anhänger verstanden, welches oder welcher zumindest ein mobil einsetzbares Element zum Camping aufweist oder zumindest temporär eine Einrichtung zum Campen aufweisen kann. Unter einem Freizeitfahrzeug wird insbesondere ein Campingfahrzeug verstanden. Ein Freizeitmobil ist ein motorisiertes Freizeitfahrzeug. Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil. Ein Wohnwagen kann zum Beispiel alternativ als Caravan oder Campinganhänger bezeichnet werden.

Im Stand der Technik ist bei Freizeitfahrzeugen eine Leichtbauweise bekannt.

Unter dem Begriff "Leichtbauweise" wird eine Konstruktionsweise verstanden, die eine Gewichtseinsparung und/oder eine Steigerung der Ressourceneffizienz zum Ziel hat. Ziel der Leichtbauweise ist die Einsparung von Roh- und Werkstoffen, Kosten und Energie bei der Herstellung, Nutzung und Verwertung eines Produkts. Insbesondere bei bewegten Massen, wie z.B. Fahrzeugen, können durch Leichtbau die Betriebskosten reduziert bzw. die Nutzlast erhöht werden. So ist bei Fahrzeugen eine geringere Antriebsleistung für die gleichen Fahreigenschaften bzw. Fahrleistungen notwendig, gleichzeitig sinkt der Kraftstoffverbrauch und das Verhältnis von Fahrzeugzu Frachtgewicht verbessert sich.

Insbesondere bei Campingfahrzeugen oder Freizeitfahrzeugen ist die Leichtbauweise wichtig, da die entsprechende Leichtbau-Technologie durch neuartige Materialien und Bauweisen ein optimales Zusammenspiel aus Ausstattung, Gewicht und Effizienz ermöglicht. Je weniger die Konstruktion wiegt, desto mehr Ausstattung kann in das Freizeitmobil integriert werden - ohne das zulässige Gesamtgewicht laut Führerscheinklassen zu gefährden. Zudem sind gewichtsreduzierte Caravans eine wichtige Voraussetzung beim Einsatz von Elektroautos. Ferner wird durch weniger Gewicht der Treibstoffverbrauch reduziert, wodurch das Freizeitmobil insgesamt effizienter wird. Beispiele für gefaltete platten-förmige Bauelemente eines Fahrzeugs sind aus der EP 3 511 085 A1, der DE 94 02 906 U1, der US 2019/291559 A1 und der DE 10 2016 224340 A1 bekannt.

Eine Aufgabe der vorliegenden Erfindung liegt darin, den Stand der Technik zu verbessern. Es ist insbesondere eine Aufgabe der Erfindung, ein Fahrwerk bzw. ein Bauteil für ein Fahrwerk eines Freizeitfahrzeuges anzugeben, welches ein deutlich reduziertes Gewicht aufweist und welches gleichzeitig robust und widerstandsfähig ist. Diese Aufgabe wird durch ein plattenförmiges Bauelement mit den Merkmalen des unabhängigen Patentanspruchs 1 gelöst. Vorteilhafte Weiterbildungen der Erfindung sind in den Unteransprüchen angegeben.

Unter einem plattenförmigen Bauelement wird vorliegend ein Bauelement verstanden, welches sich im Wesentlichen entlang einer zweidimensionalen Ebene erstreckt und entlang einer dritten Dimension eine im Vergleich zu den Maßen der Ebene eine vergleichsweise kleine Dicke aufweist.

Unter einer Faltung des Bauelements wird vorliegend ein Umbiegen der Platte entlang einer geraden Linie verstanden, sodass aus der zweidimensionalen Oberfläche des Bauelements ein dreidimensionales Gebilde wird, nämlich zwei Halbebenen, welche sich an der geraden Linie, an welcher gefaltet wurde, treffen.

Bevorzugt bildet das plattenförmige Element das gesamte Fahrwerk des Freizeitfahrzeugs.

Das erfindungsgemäße plattenförmige Element weist vorteilhafterweise ein deutlich reduziertes Gewicht auf. Hierdurch kann ein Fahrzeuggewicht eines Freizeitfahrzeuges um ein Drittel reduziert werden.

Ein weiterer Vorteil besteht darin, dass das plattenförmige Bauelement aufgrund der Faltung eine Eigensteifigkeit erfährt. Auch liegt ein Vorteil des Bauelements darin, dass durch das Falten keine Trennfugen zwischen unterschiedlichen Bauelementen auftreten.

Ferner kann durch das plattenförmige Bauelement kinetische Energie, welche vom Freizeitfahrzeug auf das Bauteil übertragen wird, deutlich besser aufgenommen und abgebaut werden.

Erfindungsgemäss weist das Bauelement ein Verbundbauteil, insbesondere ein Faserverbundbauteil, auf oder besteht aus einem Verbundbauteil, insbesondere einem Faserverbundbauteil. Ein Verbundbauteil weist vorteilhafterweise ein geringes Gewicht bei gleichzeitiger hoher Robustheit auf. Ein weiterer Vorteil des Verbundmaterials liegt darin, dass die kinetische Energie besser aufgenommen werden kann.

Unter einem Faserverbundbauteil wird ein Bauteil verstanden, dessen Material einen Faserverbund aufweist oder aus einem solchen besteht. Ein Faserverbund kann alternativ auch Faser-Kunststoff-Verbund (FKV), faserverstärkter Kunststoff oder Faserverbundkunststoff (FVK) genannt werden. Unter einem Faserverbund wird ein Werkstoff verstanden, welcher Verstärkungsfasern und eine Kunststoffmatrix aufweist. Die Matrix umgibt die Fasern, die durch Adhäsiv- oder Kohäsivkräfte an die Matrix gebunden sind. Durch die Verwendung von Faserwerkstoffen, hat ein Faserverbund im Allgemeinen ein richtungsabhängiges Elastizitätsgesetz.

Die Kernschichtplatte ist erfindungsgemäss ein Schaumstoff oder eine Wabenstruktur Ohne Matrixwerkstoff sind die hohen spezifischen Festigkeiten und Steifigkeiten der Verstärkungsfaser nicht nutzbar. Erst durch die geeignete Kombination von Faser- und Matrixwerkstoff entsteht ein neuer Konstruktionswerkstoff.

Ein Faserverbund weist in der Regel eine hohe spezifische Steifigkeit und Festigkeit auf. Dies macht ihn zu einem geeigneten Werkstoff in Leichtbauanwendungen. Aus Faserverbunden werden überwiegend flächige Strukturen hergestellt.

Die mechanischen und thermischen Eigenschaften von Faserverbunden können über eine Vielzahl von Parametern eingestellt werden. Neben der Faser-Matrix-Kombination können z.B. der Faserwinkel, der Faservolumenanteil, die Schichtreihenfolge usw. variiert werden.

Faser-Kunststoff-Verbunde gehören zu der Klasse der faserverstärkten Werkstoffe, die Mitglied der Klasse der Verbundwerkstoffe sind.

Ein Faserkunststoffverbund kann als Konstruktion aufgefasst werden. Seine Elemente können so kombiniert werden, dass sich die gewünschten Eigenschaften einstellen. Durch das Zusammenspiel der spezifischen Eigenschaften von Faserwerkstoff und Matrixwerkstoff entsteht ein neuer Werkstoff.

Die Fasern leiten die Kräfte. Durch ihre im Vergleich zur Matrix hohe Steifigkeit ziehen sie die Last auf sich. Da die Faser eine höhere Steifigkeit als die Matrix hat, wird die Last entlang der Fasern geleitet. Quer zur Faser haben Matrix und Faser oft ähnliche Elastizitätsmodule. Zusätzlich können die Kräfte durch Adhäsivkräfte über die Faser-Matrix-Grenzfläche geleitet werden. Daher findet quer zur Faser in der Regel keine Verstärkungswirkung statt. Grund hierfür ist auch die Dehnungsvergrößerung.

Die Matrix bettet die Fasern. "Betten" meint dabei, dass sie die Fasern räumlich fixiert und die Lasteinleitung und Lastausleitung ermöglicht. Zusätzlich stützt die Matrix die Fasern, z.B. gegen Ausknicken bei faserparallelem Druck. Die Lastübertragung erfolgt über die Adhäsion zwischen Faser und Matrix. Sie kann über Normal- oder Schubkräfte erfolgen. Verbunde, bei denen keine Faser-Matrix-Haftung besteht, sind nur in Sonderfällen belastbar. Die Matrix hat zudem die Aufgabe, die Fasern gegen Umgebungseinflüsse zu schützen.

Erfindungsgemäss weist das Verbundbauteil eine Sandwichbauweise auf. Unter dem Begriff "Sandwichplatte", welche eine Sandwichbauweise aufweist, kann eine im Leichtbau verwendete Bauplatte verstanden werden. Eine Sandwichplatte kann drei Schichten aufweisen, insbesondere zwei außenliegende Deckschichtplatten mit einer innenliegenden Kernschichtplatte. Das Material der Kernschichtplatte kann ein Schaummaterial oder Wabenstruktur sein.

Gemäß noch einer weiteren bevorzugten Ausführungsform weist das Verbundbauteil GFK (glasfaserverstärkten Kunststoff) und/oder CFK (kohlenstofffaserverstärkten Kunststoff) auf.

Vorteilhaft kann der Einschnitt eine V-Kerbe sein, deren Flanken durch die Faltung aneinandergelegt sind.

Die Flanken können verklebt sein.

Bevorzugt wird das plattenförmige Bauelement vor dem Falten eingeschnitten, insbesondere mit einem V-förmigen Schnitt, insbesondere einer Fräsung, wobei die Tiefe des Schnitts kleiner als die Dicke der Platte ist. Nach der Faltung kann in den insbesondere V-förmigen Schnitt zur Erhöhung der Stabilität des Endprodukts ein Klebstoff gegeben werden. Dadurch ergibt sich eine höhere Festigkeit und wird die Schwächung durch den Einschnitt zumindest zum Teil wieder ausgeglichen.

Vorteilhaft bestehen eine oder beide Deckschichtplatten aus Metall, insbesondere Aluminium.

Ein solches Material ist leicht biegbar, weist eine optisch vorteilhafte Oberfläche auf und eine zugleich hohe Festigkeit.

Bevorzugt weist ein Bauelement eine Faltung mit einem rechteckigen Winkel zwischen den beiden gefalteten Teilen des Bauelements auf. Mehrere Bauelemente können vorteilhafterweise quader- bzw. kastenförmige Formteile bilden, welche eine erhöhte Stabilität aufweisen.

Es
Gemäß einer anderen bevorzugten Ausführungsform ist eine Faltung des plattenförmigen Bauelements mithilfe einer Faltung entlang einer geraden Linie auf dem plattenförmigen Bauelement erzeugt.

Die gefalteten Bauteile bilden dreidimensionale Formteile, welche dann in einem weiteren Schritt zu einem Fahrwerk zusammengesetzt werden können. Diese dreidimensionalen Vorteile können vorteilhafterweise ohne ein Formwerkzeug hergestellt werden.

Es können durch zwei Faltungen, die sich überschneiden, bei einer Linie auf der einen Seite des Schnittpunkts eine V-förmige Faltung nach oben und auf der anderen Seite des Schnittpunkts eine V-förmige Faltung nach unten gebildet werden.

Gemäß einer bevorzugten Ausführungsform weist das Bauelement mindestens zwei und bevorzugt eine Mehrzahl von Faltungen auf, so dass durch die Faltungen des Bauelements eine Außenkante des Bauelements einen zick-zack-förmigen Verlauf aufweist. Der zick-zack-förmige Verlauf der Außenkante erhöht vorteilhafterweise die Stabilität des Bauelements. Ferner kann das plattenförmige Bauelement kinetische Energie, welche vom Freizeitfahrzeug auf das Bauteil übertragen wird, deutlich besser aufgenommen und abgebaut werden.

Gemäß einem weiteren Aspekt wird die Aufgabe der Erfindung durch ein Fahrwerk für ein Kraftfahrzeug gelöst. Das Fahrwerk weist mindestens ein oben beschriebenes plattenförmiges Bauelement auf. Es ist weiterhin bevorzugt, dass das Fahrwerk mehr als zwei oben beschriebene plattenförmige Bauelemente aufweist. Hierbei ist ferner bevorzugt, dass die plattenförmigen Bauelemente miteinander so verbunden sind, dass sich ein stabiles Gebilde, das oben genannte Fahrwerk, bildet. Um die plattenförmigen Bauteile miteinander zu verbinden, können die Bauteile miteinander verklebt sein. Ein weiterer Vorteil, dass die Bauteile miteinander verklebt sind, liegt darin, dass die kinetische Energie besser aufgenommen werden kann.

Das Fahrwerk kann ebenso wie die oben genannten Formteile vorteilhafterweise ohne ein Formwerkzeug hergestellt werden.

Gemäß einem weiteren Aspekt wird die Aufgabe der Erfindung durch ein Verfahren zur Herstellung eines oben beschriebenen plattenförmigen Bauelements gelöst. In einem ersten Schritt des Verfahrens wird ein plattenförmiges Bauelement bereitgestellt.

Gemäß einem zweiten Schritt des Verfahrens wird ein Schnitt in dem plattenförmigen Bauelement angefertigt, wobei der Schnitt entlang einer geraden Linie auf der Oberfläche des Bauelements angeordnet ist und eine Tiefe des Schnitts kleiner als eine Dicke des plattenförmigen Bauelements ist.

Gemäß einem dritten Schritt des Verfahrens wird das plattenförmige Bauelement entlang des im Bauelement angeordneten Schnittes gefaltet oder gebogen, sodass eine Form des gefalteten plattenförmigen Bauelements zumindest einen Teil eines Fahrwerks eines Freizeitfahrzeuges bildet.

Gemäß einem weiteren Aspekt wird die Aufgabe der Erfindung durch ein Verfahren zur Herstellung eines Fahrwerks für ein Freizeitfahrzeug gelöst.

Bevorzugt werden mindestens zwei gefaltete plattenförmige Bauteile hergestellt und die mindestens zwei gefalteten, plattenförmigen Bauelementen zu dem Fahrwerk zusammengesetzt oder zusammengefügt.

Ausführungsbeispiele der Erfindung sind in den Zeichnungen dargestellt und werden in der nachfolgenden Beschreibung näher erläutert.

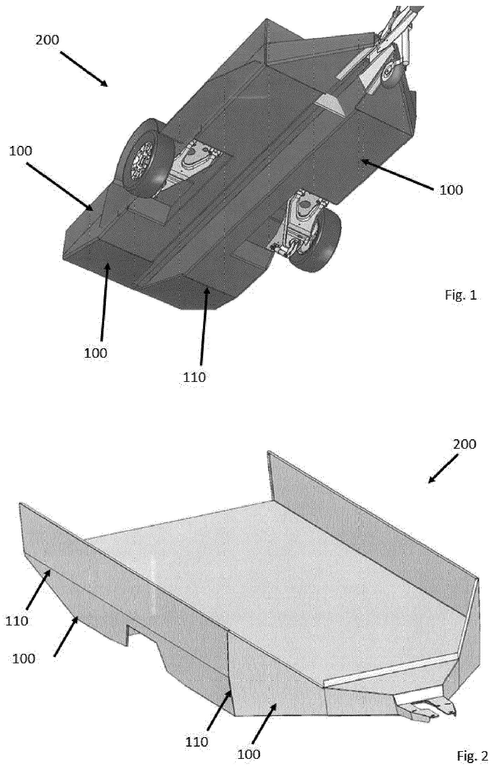

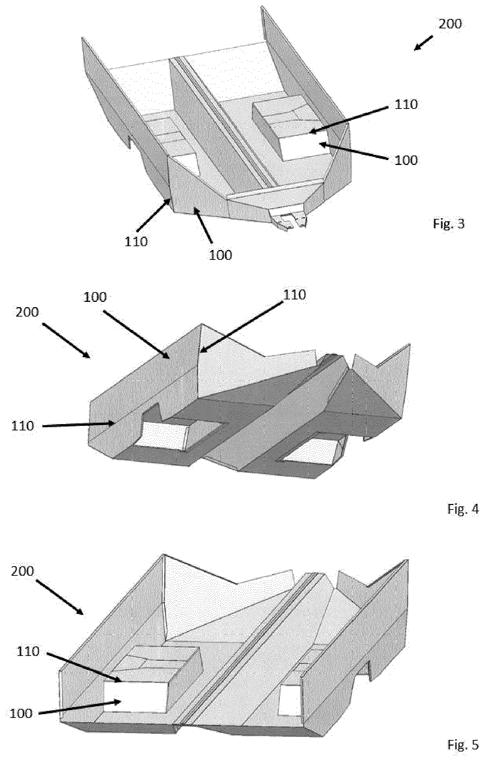

Die Figuren 1 bis 5 zeigen jeweils ein Fahrwerk für ein Freizeitfahrzeug mit jeweils mindestens einem plattenförmigen Bauelement, wobei sowohl das Fahrwerk als auch das plattenförmige Bauelement Gegenstand der vorliegenden Erfindung sind.

Figur 1 zeigt ein Fahrwerk 200 in einer Ansicht von unten. Das Fahrwerk 200 besteht aus einer Vielzahl von gefalteten plattenförmigen Bauelementen 100. Die gefalteten plattenförmigen Bauelemente 100 weisen jeweils eine Faltung 110 auf. Die unterschiedlichen plattenförmigen Bauelement 100, welche in dem Fahrwerk 200 einander angrenzen, sind miteinander verklebt.

Figur 2, Figur 3, Figur 4 und Figur 5 zeigen unterschiedliche Ansichten von unterschiedlichen Ausführungsformen des Fahrwerks 200.

## Patentansprüche

1. Plattenförmiges Bauelement, welches mindestens eine Faltung (110) aufweist, so dass das gefaltete Bauelement (100) zumindest einen Teil eines Fahrwerks (200) eines Freizeitfahrzeuges bildet, wobei das Bauelement (100) ein Verbundbauteil, insbesondere ein Faserverbundbauteil, aufweist oder aus einem Verbundbauteil, insbesondere einem Faserverbundbauteil, besteht,
**dadurch gekennzeichnet**,
das Verbundbauteil eine Sandwichbauweise aufweist wobei die Sandwichbauweise zwei außenliegende Deckschichtplatten mit einer Kernschichtplatte mit einem innenliegenden Schaumstoff oder einer Wabenstruktur aufweist und an einer Faltung eine Deckschicht und die Kernschichtplatte eingeschnitten sind, während die andere Deckschichtplatte durchläuft.

2. Plattenförmiges Bauelement nach Anspruch 1,
**dadurch gekennzeichnet,**
**dass** der Einschnitt eine V-Kerbe ist, deren Flanken durch die Faltung aneinandergelegt sind.

3. Plattenförmiges Bauelement nach Anspruch 2.
**dadurch gekennzeichnet,**
**dass** die Flanken verklebt sind.

4. Plattenförmiges Bauelement nach Anspruch 2 oder 3.
**dadurch gekennzeichnet,**
**dass** eine oder beide Deckschichtplatten aus Metall, insbesondere Aluminium, bestehen.

5. Plattenförmiges Bauelement nach einem der Ansprüche 1 bis 4.
**dadurch gekennzeichnet,**
**dass** das Verbundbauteil GFK und/oder CFK aufweist.

6. Plattenförmiges Bauelement nach einem der vorangegangenen Ansprüche,
**dadurch gekennzeichnet,**
**dass** eine Faltung des plattenförmigen Bauelements (100) mithilfe einer Faltung entlang einer geraden Linie auf dem plattenförmigen Bauelement (100) erzeugt ist.

7. Plattenförmiges Bauelement nach einem der vorangegangenen Ansprüche,
**dadurch gekennzeichnet,**
**dass** durch zwei Faltungen, die sich überschneiden, bei einer Linie auf der einen Seite des Schnittpunkts eine V-förmige Faltung nach oben und auf der anderen Seite des Schnittpunkts eine V-förmige Faltung nach unten gebildet wird.

8. Plattenförmiges Bauelement nach einem der vorangegangenen Ansprüche,
**dadurch gekennzeichnet,**
**dass** das Bauelement (100) mindestens zwei Faltungen (110) bevorzugt eine Mehrzahl, aufweist, so dass durch die Faltungen des Bauelements (100) eine Außenkante des Bauelements (100) einen zick-zack-förmigen Verlauf aufweist.

9. Fahrwerk für ein Freizeitfahrzeug aufweisend:
mindestens ein plattenförmiges Bauelement (100) nach einem der vorangegangenen Ansprüche.

10. Verfahren zur Herstellung eines plattenförmigen Bauelements nach einem der Ansprüche 1 bis 8,
mit folgenden Schritten:
- Bereitstellen eines plattenförmigen Bauelements (100);
- Anfertigen eines Schnittes in dem plattenförmigen Bauelement (100), wobei der Schnitt entlang einer geraden Linie auf der Oberfläche des Bauelements (100) angeordnet ist und eine Tiefe des Schnitts kleiner als eine Dicke des plattenförmigen Bauelements (100) ist;
- Falten oder Biegen des plattenförmigen Bauelements (100) entlang des im Bauelement (100) angeordneten Schnittes, so dass eine Form des gefalteten plattenförmigen Bauelements (100) zumindest einen Teil eines Fahrwerks (200) eines Freizeitfahrzeuges bildet.

11. Verfahren zur Herstellung eines plattenförmigen Bauelements nach Anspruch 10,
**dadurch gekennzeichnet,**
**dass** der Schnitt als V-förmige Fräsung ausgeführt wird und optional ein Klebstoff in die Kerbe eingebracht wird vor dem falten oder Biegen.

12. Verfahren zur Herstellung eines Fahrwerks für ein Freizeitfahrzeug nach Anspruch 9, mit folgenden Schritten:
- Herstellen von mindestens zwei gefalteten, plattenförmigen Bauelementen (100) durch ein Verfahren nach Anspruch 10 oder 11;
- Zusammensetzen oder Zusammenfügen der mindestens zwei gefalteten plattenförmigen Bauelementen (100) zu dem Fahrwerk (200).

## Claims

1. Panel-like structural element having at least one fold (110) such that the folded structural element (100) forms at least a part of a chassis (200) of a recreational vehicle, wherein the structural element (100) comprises a composite component, in particular a fibre-composite component, or consists of a composite component, in particular a fibre-composite component,
**characterized**
**in that** the composite component is of sandwich-type construction, wherein the sandwich-type construction has two outer cover-layer panels with a core-layer panel with an inner foam or a honeycomb structure, and, at a fold, one cover layer and the core-layer panel have an incision made in them while the other cover-layer panel is continuous.

2. Panel-like structural element according to Claim 1,
**characterized**
**in that** the incision is a V-notch whose flanks are placed against one another by way of the fold.

3. Panel-like structural element according to Claim 2,
**characterized**
**in that** the flanks are adhesively bonded.

4. Panel-like structural element according to Claim 2 or 3,
**characterized**
**in that** one or both cover-layer panels consist of metal, in particular aluminium.

5. Panel-like structural element according to one of Claims 1 to 4,
**characterized**
**in that** the composite component comprises GFRP and/or CFRP.

6. Panel-like structural element according to one of the preceding claims,
**characterized**
**in that** a fold of the panel-like structural element (100) is produced on the panel-like structural element (100) with the aid of a folding operation along a straight line.

7. Panel-like structural element according to one of the preceding claims,
**characterized**
**in that**, by way of two folds, which intersect, at a line, on one side of the point of intersection, a V-shaped fold is formed upwards and, on the other side of the point of intersection, a V-shaped fold is formed downwards.

8. Panel-like structural element according to one of the preceding claims,
**characterized**
**in that** the structural element (100) has at least two folds (110), preferably a plurality, such that, by way of the folds of the structural element (100), an outer edge of the structural element (100) has a zigzag-shaped profile.

9. Chassis for a recreational vehicle
having:
at least one panel-like structural element (100) according to one of the preceding claims.

10. Method for producing a panel-like structural element according to one of Claims 1 to 8,
comprising the following steps:
- providing a panel-like structural element (100);
- making a cut in the panel-like structural element (100), wherein the cut is arranged on the surface of the structural element (100) along a straight line, and a depth of the cut is smaller than a thickness of the panel-like structural element (100);
- folding or bending the panel-like structural element (100) along the cut arranged in the structural element (100), such that a shape of the folded panel-like structural element (100) forms at least a part of a chassis (200) of a recreational vehicle.

11. Method for producing a panel-like structural element according to Claim 10,
**characterized**
**in that** the cut is configured as a V-shaped milling, and optionally an adhesive is introduced into the notch prior to the folding or bending.

12. Method for producing a chassis for a recreational vehicle according to Claim 9, comprising the following steps:
- producing at least two folded panel-like structural elements (100) by way of a method according to Claim 10 or 11;
- assembling or joining together the at least two folded panel-like structural elements (100) to form the chassis (200).

## Revendications

1. Élément en forme de panneau, qui présente au moins un pli (110), de telle sorte que l'élément plié (100) forme au moins une partie d'un châssis (200) d'un véhicule de loisirs, l'élément (100) présentant un composant composite, notamment un composant composite fibreux, ou étant constitué d'un composant composite, notamment d'un composant composite fibreux,
**caractérisé en ce que**
le composant composite présente une construction en sandwich, la construction en sandwich présentant deux panneaux de couche de recouvrement extérieurs avec un panneau de couche centrale avec une mousse intérieure ou une structure en nid d'abeilles, et une couche de recouvrement et le panneau de couche centrale étant découpés au niveau d'un pli, tandis que l'autre panneau de couche de recouvrement est continu.

2. Élément en forme de panneau selon la revendication 1, **caractérisé en ce que** la découpure est une entaille en V dont les flancs sont placés l'un contre l'autre par le pli.

3. Élément en forme de panneau selon la revendication 2, **caractérisé en ce que** les flancs sont collés.

4. Élément en forme de panneau selon la revendication 2 ou 3, **caractérisé en ce qu'**un ou les deux panneaux de couche de recouvrement sont constitués de métal, notamment d'aluminium.

5. Élément en forme de panneau selon l'une quelconque des revendications 1 à 4, **caractérisé en ce que** le composant composite comprend du GFK et/ou du CFK.

6. Élément en forme de panneau selon l'une quelconque des revendications précédentes, **caractérisé en ce qu'**un pli de l'élément en forme de panneau (100) est produit à l'aide d'un pli le long d'une ligne droite sur l'élément en forme de panneau (100).

7. Élément en forme de panneau selon l'une quelconque des revendications précédentes, **caractérisé en ce que** deux plis qui s'intersectent forment un pli en forme de V vers le haut sur une ligne d'un côté du point d'intersection et un pli en forme de V vers le bas de l'autre côté du point d'intersection.

8. Élément en forme de panneau selon l'une quelconque des revendications précédentes, **caractérisé en ce que** l'élément (100) présente au moins deux plis (110), de préférence une pluralité, de telle sorte que, grâce aux plis de l'élément (100), un bord extérieur de l'élément (100) présente un tracé en forme de zigzag.

9. Châssis pour un véhicule de loisirs, présentant :
au moins un élément en forme de panneau (100) selon l'une quelconque des revendications précédentes.

10. Procédé de fabrication d'un élément en forme de panneau selon l'une quelconque des revendications 1 à 8, avec les étapes suivantes :
- la fourniture d'un élément en forme de panneau (100) ;
- la réalisation d'une coupe dans l'élément en forme de panneau (100), la coupe étant agencée le long d'une ligne droite sur la surface de l'élément (100) et une profondeur de la coupe étant inférieure à une épaisseur de l'élément en forme de panneau (100) ;
- le pliage ou le cintrage de l'élément en forme de panneau (100) le long de la coupe agencée dans l'élément (100), de telle sorte qu'une forme de l'élément en forme de panneau plié (100) forme au moins une partie d'un châssis (200) d'un véhicule de loisirs.

11. Procédé de fabrication d'un élément en forme de panneau selon la revendication 10, **caractérisé en ce que** la coupe est réalisée sous la forme d'une fraisure en forme de V et, en option, un adhésif est appliqué dans l'entaille avant le pliage ou le cintrage.

12. Procédé de fabrication d'un châssis pour un véhicule de loisirs selon la revendication 9, avec les étapes suivantes :
- la fabrication d'au moins deux éléments en forme de panneau pliés (100) par un procédé selon la revendication 10 ou 11 ;
- l'assemblage ou le jointoiement des au moins deux éléments en forme de panneau pliés (100) pour former le châssis (200).
